# EUROPEAN PATENT APPLICATION

(11) **EP 0 927 934 A1**
(43) Date of publication of application: **07.07.1999**
(21) Application number: 98929737.9
(22) Date of filing: 29.06.1998
(51) Int. Cl.: G06F 12/00

(54) **FILE MANAGING DEVICE, FILE MANAGING METHOD, AND RECORDING MEDIUM STORED WITH FILE MANAGING PROGRAM**

(30) Priority: 30.06.1997 JP 17342697
(71) Applicant: MATSUSHITA ELECTRIC INDUSTRIAL CO., LTD., Kadoma-shi, Osaka 571-8501 (JP)
(72) Inventor: KUNO, Yoshiki, Moriguchi-shi, Osaka 570-0054 (JP); KOUDO, Toshikazu, Nishinomiya-shi, Hyogo 663-8102 (JP); KOSHINO, Toshiharu, Kadoma-shi, Osaka 571-0032 (JP); TOYONAGA, Eiichi, Ikoma-shi, Nara 630-0243 (JP)
(74) Representative: Jung, Elisabeth, Dr.
(86) International application number: JP9802904
(87) International publication number: WO9900728

(57) **Abstract**

In order to obtain a data transfer rate required to record/reproduce audiovisual data, the present invention is intended to provide a file control apparatus capable of immediately carrying out recording without executing any garbage collection process immediately before recording audiovisual data, a method therefor, and a recording medium with recorded file control programs; the file control apparatus of the present invention comprises a means for generating a contiguous free area in a disk apparatus, a means for generating fixed files in the contiguous free area, a means for structuring a large-capacity volume file by connecting the plural fixed files, and a means for maintaining the file arrangement of the fixed files at the time of the recording or renewal of the data of the fixed files.

## Description

### TECHNICAL FIELD

The present invention relates to a file control apparatus for carrying out file control in a disk apparatus for recording/reproducing multimedia data requiring a constant transfer rate, such as audiovisual data, a file control method and a recording medium with recorded file control programs in a personal computer (hereinafter simply referred to as a "PC") and a home-use multimedia apparatus.

### BACKGROUND ART

Conventionally, the recording and reproduction of audiovisual data have been carried out mainly by tape media. Recently, instead of an analog-signal recording system, a recording system using digital signals has become mainstream in the recording and reproduction of audiovisual data because of the development of digital technology. In this situation, applications for recording/reproducing audiovisual data in PCs in real time are increasing because of the abrupt widespread use of PCs and the advent of large-capacity disk apparatuses. By using PCs in this way, operations, such as the storing, editing and processing of audiovisual data, can be carried out easily. In a file control method in the case of storing audiovisual data in a disk apparatus by using a PC, fetched audiovisual data is generated directly as a file and stored by the file system of an existing operating system (hereinafter referred to as "OS") in general.

An example of a conventional file control method for storing audiovisual data in a disk apparatus by using a PC will be described below.

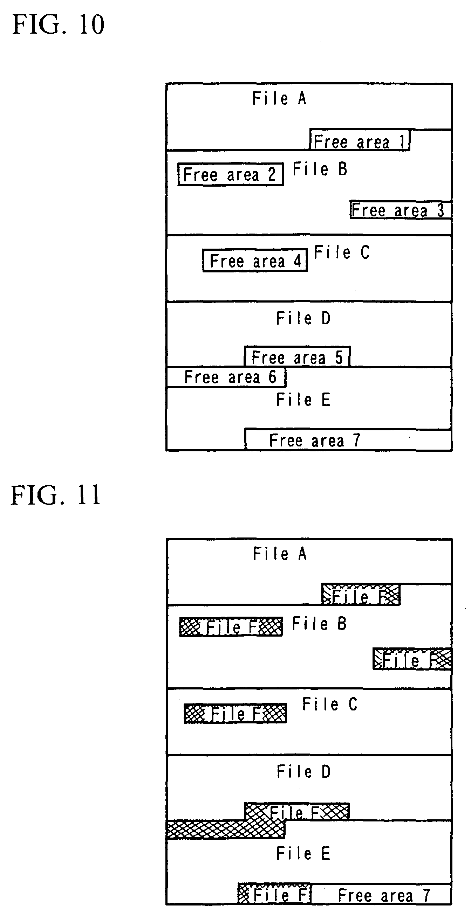

FIG. 10 is a conceptual view showing a file storage condition on a disk to be used as a recording medium in a disk apparatus. In FIG. 10, files A to E represent data recorded on the disk, such as audiovisual data or computer program data, and free areas 1 to 7 represent free areas on the disk. As shown in FIG. 10, the files A to E have been stored on the disk while having the free areas.

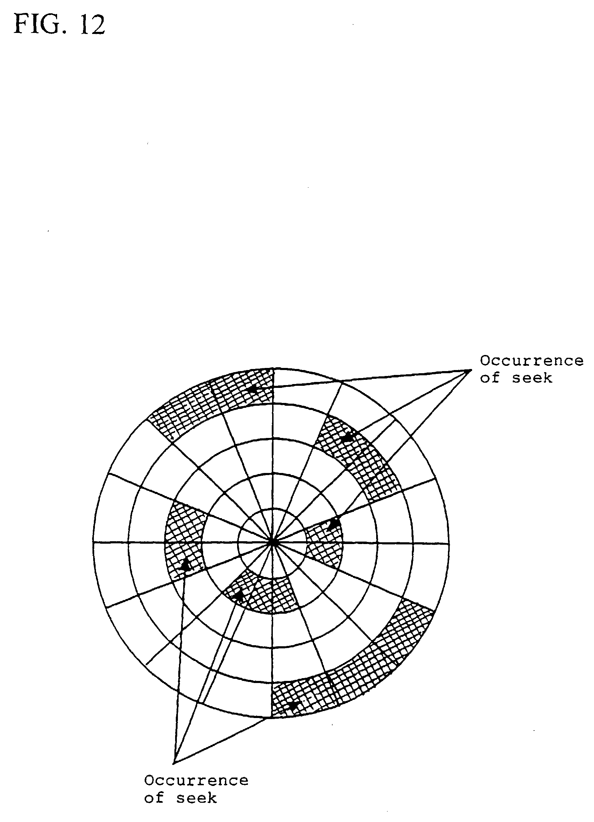

In the condition shown in FIG. 10, in the case when new audiovisual data is stored on the disk as a file F, the audiovisual data is written in the distributed free areas, i.e., the free areas 1 to 7, sequentially. FIG. 11 is a conceptual view showing a condition wherein the file F is written in the free areas 1 to 7 on the disk. When the audiovisual data is stored in the free areas distributed in this way, the file arrangement on the disk becomes a condition indicated by the shaded areas of FIG. 12. FIG. 12 is a conceptual view showing the file arrangement on the disk to be used as a recording medium and also shows a condition wherein the file F is separated into plural data blocks and recorded. Once the file F has been stored in the distributed free areas as shown in FIG. 12, in the case when the writing/reading of the file F is executed, seek operation occurs frequently. If the seek operation occurs frequently at the time of reproduction in this way, this causes a problem of being unable to obtain a transfer rate required for reproducing the audiovisual data.

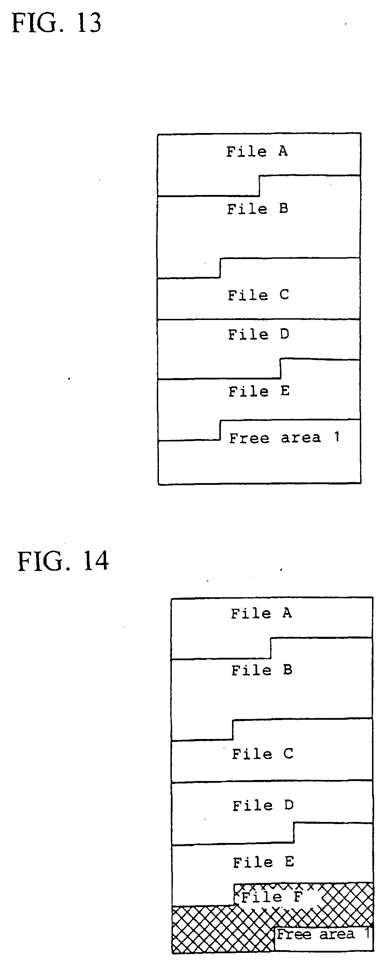

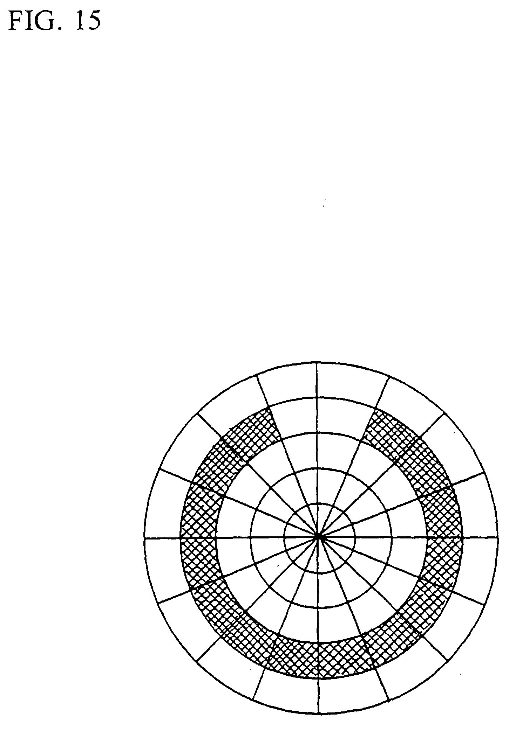

Therefore, to solve the above-mentioned problem in particular, in a conventional file control method, a garbage collection (defragmentation) process is carried out in order to optimize file arrangement by collecting distributed files and free areas so that they become contiguous. FIG. 13 is a conceptual view showing a file storage condition after the garbage collection (defragmentation) process is carried out. As shown in FIG. 13, the distributed free areas are collected, and one contiguous free area 1 is formed. In the file storage condition shown in FIG. 13, the file F of the audiovisual data is written in the free area 1. FIG. 14 is a view showing a condition wherein the file F is written in the free area 1 of FIG. 13. FIG. 15 is a view showing file arrangement on the disk used as a recording medium, and shows a condition wherein the file F of FIG. 14 is written in a contiguous area indicated by shading. Since the file F is arranged in the contiguous condition on the disk in this way, seek operation occurs less frequently, whereby a transfer rate required for reproducing audiovisual data can be obtained.

As described above, in the conventional file control method, each time a file is stored on a disk, audiovisual data is recorded and reproduced in a contiguous recording area of the disk while the garbage collection (defragmentation) process is carried out. The Japanese Published Unexamined Patent Application, Publication No. Hei 7-200369 is a conventional example disclosing this kind of technology.

In the conventional file control method, audiovisual data is written on a disk used as a recording medium after the garbage collection (defragmentation) process for optimizing file arrangement is carried out in order to obtain a transfer rate required at the time of reproducing the audiovisual data. In this way, in the conventional file control method, the garbage collection process is always required to be carried out immediately before recording audiovisual data. For this reason, the conventional file control method has a problem of being unable to carry out immediate recording.

### DISCLOSURE OF INVENTION

The present invention is intended to provide a file control apparatus capable of immediately recording data while the transfer rate of the data is obtained, a method therefor, and a recording medium with recorded file control programs.

In order to attain the above-mentioned object, the file control apparatus in accordance with the present invention comprises:
a free area generating means for generating a contiguous free area;
a fixed file generating means for generating plural fixed files having a substantially constant file size in the above-mentioned contiguous free area;
a volume file structuring means for structuring a large-capacity volume file by connecting the above-mentioned plural fixed files; and
a fixed file maintaining means for maintaining the file arrangement of the above-mentioned fixed files at the time of the recording or renewal of the data of the above-mentioned fixed files.

The file control method in accordance with the present invention comprises:
a free area generating process for generating a contiguous free area;
a fixed file generating process for generating plural fixed files having a substantially constant file size in the generated contiguous free area;
a volume file structuring process for structuring a large-capacity volume file by connecting the above-mentioned plural fixed files; and
a fixed file maintaining process for maintaining the file arrangement of the above-mentioned fixed files at the time of the recording or renewal of the data of the above-mentioned fixed files.

The recording medium in accordance with the present invention with recorded file control programs for:
generating a contiguous free area;
generating plural fixed files having a substantially constant file size in the generated contiguous free area;
structuring a large-capacity volume file by connecting the above-mentioned plural fixed files; and
maintaining the file arrangement of the above-mentioned fixed files at the time of the recording or renewal of the data of the above-mentioned fixed files.

Therefore, with the present invention, the arrangement of the recorded data on the recording medium becomes contiguous in one fixed file, whereby extra processes such as a garbage collection process are not required to be carried out at the time of data recording; therefore, immediate data recording is possible, and a predetermined data transfer rate can be obtained.

### BRIEF DESCRIPTION OF THE DRAWINGS

FIG. 1 is a block diagram showing the configuration of a file control apparatus in accordance with an embodiment of the present invention;
FIG. 2 is a schematic view showing a file configuration in a disk apparatus in accordance with the embodiment of the present invention;
FIG. 3 is a flowchart showing a new generation process procedure for a file control area in accordance with the embodiment of the present invention;
FIG. 4 is a reading characteristic view of the disk apparatus in accordance with the embodiment of the present invention;
FIG. 5 is an explanatory view showing a volume file allocation table and a volume file control table in accordance with the embodiment of the present invention;
FIG. 6 is an explanatory view showing an example of a control condition of volume files executed in accordance with the embodiment of the present invention;
FIG. 7 is a flowchart showing an enlargement process procedure for the file control area in accordance with the embodiment of the present invention;
FIG. 8 is a flowchart showing a reduction process procedure for the file control area in accordance with the embodiment of the present invention;
FIG. 9 is an explanatory view showing other examples of the free area control method in accordance with the present invention;
FIG. 10 is a conceptual view showing a file arrangement condition immediately before a file control method is executed;
FIG. 11 is a conceptual view showing a file arrangement condition in the case when file control is carried out without carrying out any garbage collection process in a conventional file control method;
FIG. 12 is a conceptual view showing file arrangement on a disk in the case when no garbage collection process is carried out in the conventional file control method;
FIG. 13 is a conceptual view showing a file arrangement condition after a garbage collection process is carried out in the conventional file control method;
FIG. 14 is a conceptual view showing a file arrangement condition in the case when file generation is carried out after a garbage collection process is carried out in the conventional file control method; and
FIG. 15 is a conceptual view showing file arrangement on a disk after a garbage collection process is carried out in the conventional file control method.

### BEST MODE FOR CARRYING OUT THE INVENTION

An embodiment showing the best mode regarding the file control apparatus, the file control method and the recording medium with recorded file control programs of the present invention will be described below referring to the accompanying drawings.

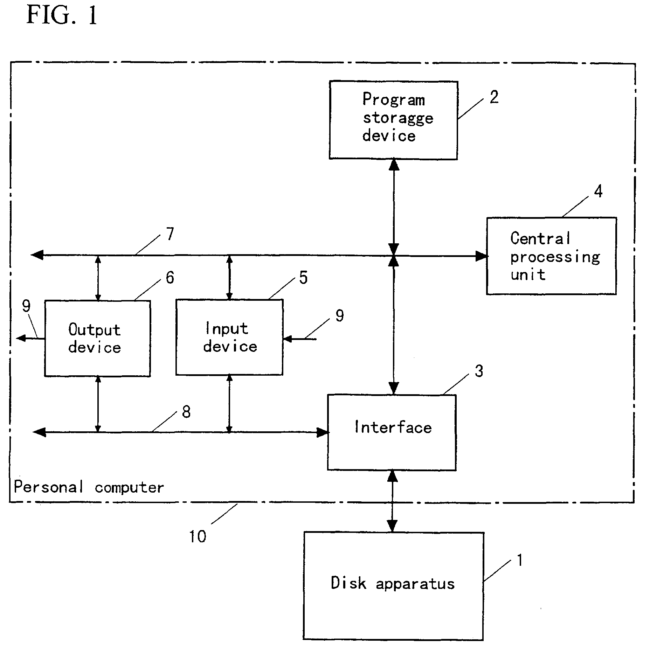

FIG. 1 is a block diagram showing the configuration of a file control apparatus in accordance with the present invention. In FIG. 1, a disk apparatus 1 is usually referred to as a secondary storage device, and is a recording/reproducing device having a lower processing speed in comparison with a main storage device described later. The disk apparatus 1 is connected to a PC 10 via an interface 3. The PC 10 has a program storage device 2, i.e., a main storage device having a high processing speed, to be used to execute software. In addition, the PC 10 has a central processing unit 4, an input device 5 for quantizing an audiovisual signal 9, and an output device 6 for converting the quantized audiovisual data into the original audiovisual signal 9 and outputting the signal. These devices are connected to a bus 7 and configured so that data transmission can be carried out. The quantized audiovisual data is transferred between the disk apparatus 1 and the input device 5 or the output device 6 via the interface 3 through a special-purpose bus 8.

Next, signal flow in the case of recording the audiovisual signal 9 in the disk apparatus 1 will be described.

The audiovisual signal 9 is continuous data having no break, and this audiovisual signal 9 is quantized continuously by the input device 5. The quantized audiovisual data is transmitted from the interface 3 to the disk apparatus 1 through the special-purpose bus 8, and recorded as audiovisual data.

Conversely, in the case of reproducing the audiovisual data, the audiovisual data recorded in the disk apparatus 1 is read and transferred to the output device 6 via the interface 3 through the special-purpose bus 8. By the output device 6, the audiovisual data is converted and output as the audiovisual signal 9.

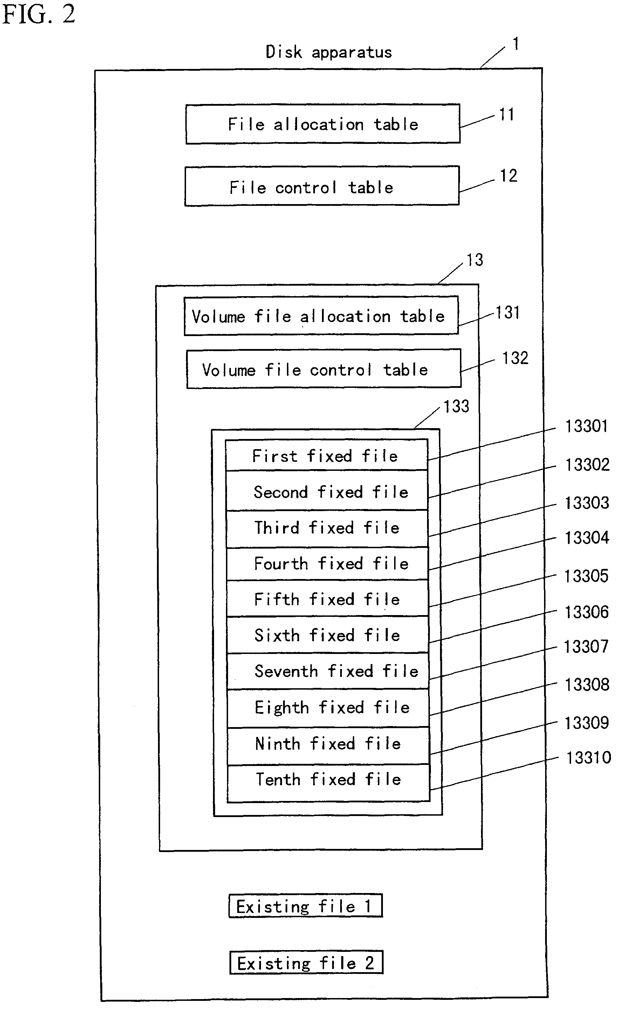

FIG. 2 is a schematic view showing a file configuration in a file control method in accordance with the present invention which is carried out by the data control apparatus configured as described above. Furthermore, the data control apparatus in accordance with the embodiment of the present invention is provided with a general-purpose operating system (OS), and the OS is equipped with a general-purpose file system.

As shown in FIG. 2, a file allocation table 11 is stored in the recording area of the disk in the disk apparatus 1, and various kinds of information to be referenced by the file system provided on the general-purpose OS are recorded in this file allocation table 11. In the file allocation table 11, connection information among plural data blocks constituting files and a table indicating the relationship between the data blocks and their physical positions on the disk are described for example.

In addition, a file control table 12 to be referenced by the above-mentioned file system is stored in the storage area of the disk apparatus 1. This file control table 12 is a table used to control the list of all files being present on the file system. For example, file names, connection information to the head data block constituting a file and the like are recorded in the file control table 12. As shown in FIG. 2, an existing file 1 and an existing file 2 are stored in the disk apparatus 1, and the existing file 1 and the existing file 2 are ordinary conventional files directly controlled by the file system on the general-purpose operating system (general-purpose OS). The existing file 1 and the existing file 2 are referenced by the file control table 12 and the file allocation table 11.

In FIG. 2, the area inside the frame designated by the numeral 13 is a usually usable recording/reproducing area controlled by the above-mentioned file system. As shown in FIG. 2, a volume file allocation table 131, a volume file control table 132 and a fixed file group 133 are stored in the recording/reproducing area of this disk apparatus 1.

The fixed file group 133 is a group of plural fixed files; in the present embodiment, ten fixed files, i.e., a first fixed file 13301 to a tenth fixed file 13310, are provided. A fixed file in the present embodiment is a file having a predetermined constant number of sectors (data size), and has a data size required to store audiovisual data. The data size of the fixed file in the present embodiment is determined to be one megabyte for example.

Even if the fixed file formed in this way is overwritten by a file having a different data size, the file is processed by a data control method described later so that the file configuration remains unchanged. In the case when the size of new audiovisual data to be recorded or renewed is smaller than the data size of the fixed file for example, dummy data is recorded or renewed in its extra recording area. Conversely, in the case when the size of new audiovisual data to be recorded or renewed is larger than the data size of the fixed file, the new data is recorded or renewed across plural fixed files.

In the data control method of the present embodiment, garbage collection (defragmentation) for collecting free areas on the disk to form a new free area is not required to be carried out each time new audiovisual data is recorded or renewed. In addition, the data control method of the present embodiment differs from a method wherein new data is written by obtaining a free area completely separate from the fixed file group 133 and by carrying out recording or renewing. Furthermore, the data control method of the present embodiment differs from a method wherein an original file is deleted and file arrangement is made completely different from the original file configuration.

In the data control method of the present embodiment described below, an example in the case wherein the file size of each fixed file has a constant data size and recording is carried out by overwriting and renewal will be described to simplify explanation.

The fixed file group 133, i.e., a large-capacity file (hereinafter referred to as a volume file), is formed in the recording/reproducing area 13 of the disk apparatus 1. The volume file allocation table 131 used as a volume file structuring means stored in the recording/reproducing area 13 controls connection information for the fixed file group 133 having the plural fixed files 13301 to 13310.

Furthermore, the volume file control table 132 stored in the recording/reproducing area 13 is a table for controlling various kinds of information in the above-mentioned volume file. As information controlled by the volume file control table 132, when mentioned more specifically, a volume file name, the number of the head fixed file constituting the volume file, the number of connections of the fixed files and the like are stored.

The area controlled by the file control method in accordance with the present invention is the entire area of the fixed file group 133.

### [ Execution action of the file control method ]

Next, the case of executing the file control method of the present invention will be described when a file storage condition in a disk apparatus is such that files are stored as shown in the above-mentioned FIG. 10.

FIG. 10 shows a file storage condition on the disk immediately before the file control method of the present invention is executed. In FIG. 10, in the recording/reproducing area on the disk, computer programs, user data and the like are stored in files A to E. As shown in FIG. 10, in the recording/reproducing area on the disk, plural small free areas 1 to 7 are formed discontinuously as a result of recording and deletion processes of plural times. For this reason, as shown in the above-mentioned FIG. 12, these small free areas are distributed and arranged discontiguously on the disk.

### [ Initial generation procedure for file control areas ]

A procedure for executing the file control method of the present invention in a condition wherein small free areas are distributed on a disk as described above will be described referring to the drawings.

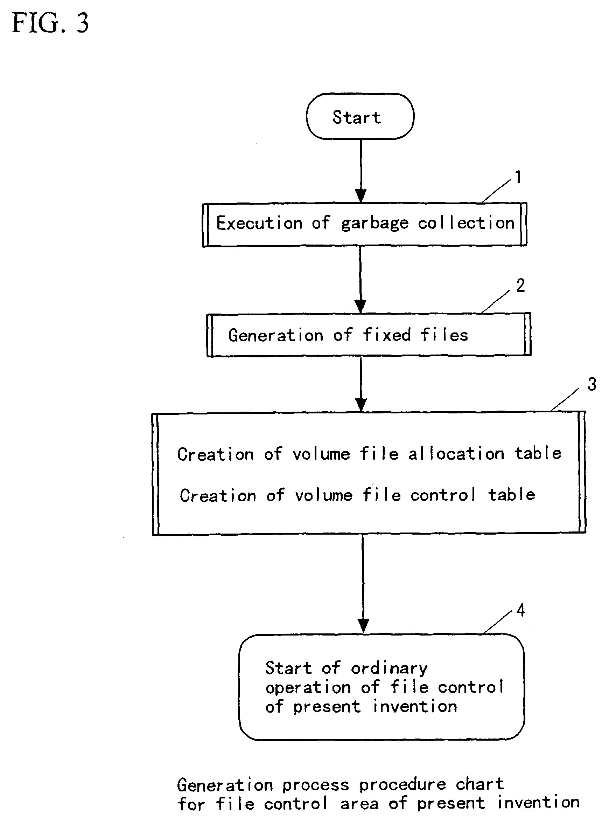

First, a new generation procedure for newly creating a volume file on the disk in accordance with the file control method of the present invention will be described. FIG. 3 is a flowchart showing the new generation procedure for newly creating a volume file in accordance with the file control method of the present invention.

At step 1 of FIG. 3, a garbage collection (defragmentation) process for optimizing file arrangement is carried out so that plural files and distributed free areas become contiguous (see FIG. 13). A specific method for the garbage collection process will be described below.

In the file system in the disk apparatus 1, the physical arrangement of files is controlled in accordance with the file allocation table 11 (FIG. 1 (sic)). In the file allocation table 11, special codes (flags or the like) are assigned at the addresses of free areas. In the file storage condition shown in FIG. 10, the free capacity of the free area 1 is acquired, and the head data of the file B is moved by the amount of the capacity. As a result, the area of the free area 1 is moved backward by the amount of its free capacity. The physical arrangement information of the free area 1 after the movement is informed to the file allocation table 11. Next, the free capacity of the free area 2 is acquired, and the data of the file B is moved forward further, and the free area 2 is moved backward by the amount of its free capacity.

By moving the free areas 1 to 7 backward in this way, plural free areas become connected as one contiguous area. As a result, as shown in the above-mentioned FIG. 15, one contiguous free area (a shaded portion) is obtained on the disk of the disk apparatus 1.

Next, at step 2 of FIG. 3, a volume file having plural fixed files is generated in the contiguous free area. As a method of generating a fixed file having a predetermined data size, an ordinary file is newly created, and dummy data having a predetermined fixed capacity is written in the file, for example. Alternatively, as another method, after a file is newly created by the file system, a logical data writing position (pointer) is moved to the "fixed volume - 1 byte" position in the file, that is, the last byte position of each fixed file having the fixed volume, and one byte of dummy data is written at the position. By writing the dummy data at the last byte in this way, the dummy data having the fixed volume is written automatically in the range from the head to the last byte position of the file, whereby a fixed file having a fixed volume can be created.

As described above, plural fixed files are created in one contiguous free area, and the file positions are determined. The names of the fixed files created at this time may be determined by the user as desired. By adding numerical information indicating the ordinal levels of the fixed files such as "file 1.dat" and "file 2.dat" as the names of the fixed files, file control can be carried out easily.

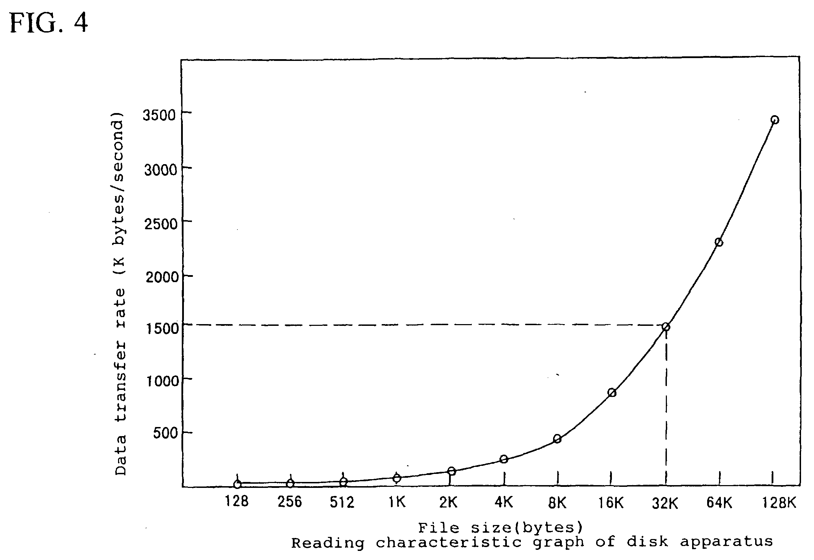

The size of the fixed file is required to have a file size ensuring a transfer rate required for recording/reproducing audiovisual data or a larger size. FIG. 4 is a graph showing an example of a reading characteristic of the disc device 1. This characteristic represents a relationship between a reading size and a reading speed (data transfer rate) in the case when the disk rotation waiting time required at the time of reading data becomes maximum (in other words, in the case of one rotation) and in the case when a seek required for reading takes the maximum distance (in other words, in the case of reading from the innermost area to the outermost area or in the case of reading from the outermost area to the innermost area).

In FIG. 4, the ordinate represents a data transfer rate (kilobytes/second), and the abscissa represents a file size (bytes). When it is assumed that the disk apparatus 1 of the present embodiment has a reading characteristic shown in FIG. 4, the file size of a fixed file should be set at 32 kilobytes or more to obtain a data transfer rate, for example, to ensure a data transfer rate of 1500 kilobytes/second. As shown in FIG. 4, the larger the capacity of a file size, the higher the transfer rate can be ensured; for example, when a capacity of 1 megabytes or more is obtained as a fixed file, processing can be carried out at a higher rate.

Since the plural fixed files generated as described above are connected to form one volume file and controlled, a volume file allocation table 131 and a volume file control table 132 are created at step 3 of FIG. 3.

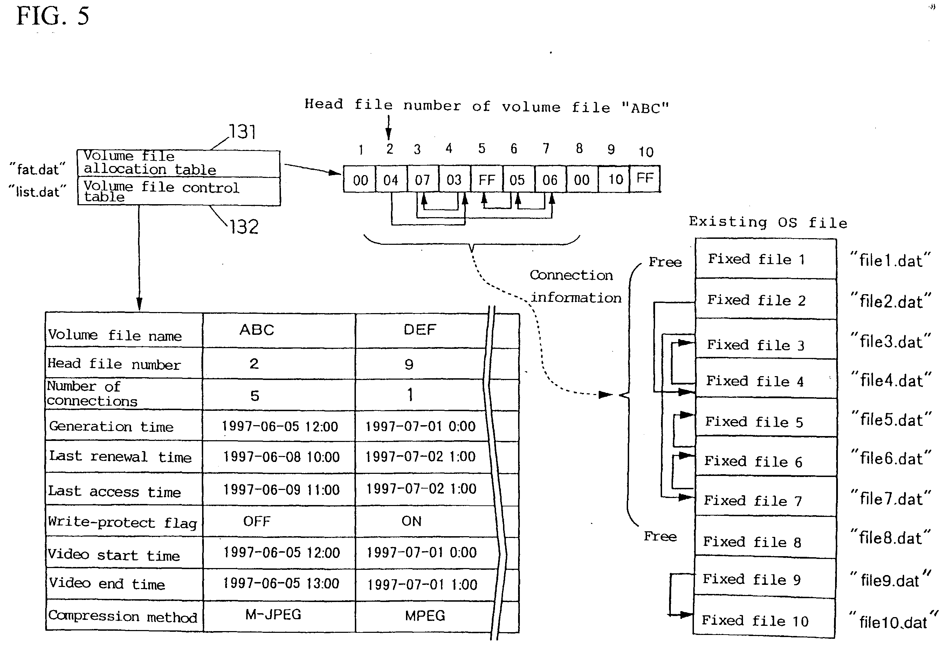

FIG. 5 is an explanatory view showing examples of the volume file allocation table 131 and the volume file control table 132.

In FIG. 5, connection information regarding the volume file formed by connecting plural fixed files is described in the control information file "fat.dat" of the volume file allocation table 131.

The connection information of the plural fixed files in the volume file is controlled in accordance with the volume file allocation table 131. In the connection information of the volume file allocation table 131, for example, numbers 1 to n (n is an integer) are assigned to n fixed files in order respectively, and the connection condition of each fixed file is described by using the number. For example, when the file name of a fixed file is "file 1.data," its file number is assumed to be 1; when the file name of a fixed file is "file 2.data," its file number is assumed to be 2.

FIG. 5 shows the specific contents of a volume file "ABC" in the volume file allocation table 131. It is indicated that the head file number of the volume file "ABC" is file number 2, and that the next connection destination of the fixed file designated by file number 2 is file number 4. The connection destination of file number 4 is file number 3, the connection destination of file number 3 is file number 7, the connection destination of file number 7 is file number 6, and the connection destination of file number 6 is file number 5. And in the case of the last fixed file, a hexadecimal number "FF" for example is described as its file number so as to indicate a special file, thereby indicating the last of the single volume file. In this way, the connection conditions of the plural fixed files are indicated in the volume file allocation table 131, and the single volume file is controlled.

Furthermore, in the volume file allocation table 131, by using a special value such as "00" as the file number of a connection destination for example, free area control makes it possible to recognize that the fixed file designated by the file number is a free area. In the present embodiment, the information indicating the connection destinations in the volume file allocation table 131 is used as connection information.

On the other hand, in the control information file "list.dat" of the volume file control table 132, the file names and attribute information of all volume files are stored. As shown in FIG. 5, as specific control items controlled by the volume file control table 132 of the present embodiment, a volume file name, a head fixed file number (or a fixed file name), the number of connections of fixed files (or the capacity of a volume file), generation time, last renewal time, last access time, writing/reading permission flags and the like are available; in particular in an application for recording/reproducing audiovisual data, video start time, video end time, recording time, a compression method of audiovisual data and the like are controlled as added information in addition to the above-mentioned contents.

In the initial condition, the volume file control table 132 is in a blank condition and filled with blank data.

Next, at step 4 shown in FIG. 3, ordinary operation for the file control method of the present invention starts in a volume file. The ordinary operation herein is processing operation for carrying out the recording, reproduction and deletion of audiovisual data.

In the processing operation for recording, reproducing and deleting fixed files at the time of the ordinary operation, when a fixed file is open, the head recording position of each fixed file in a volume file on a disk is detected in accordance with the file control table 12 and the file allocation table 11 of the disk apparatus 1. The current recording position is stored in the program storage device 2 (FIG. 1) after recording is started from the detected head recording position until the file is closed. By storing the current recording position of the fixed file in the program storage device 2 in this way, audiovisual data can be read and written continuously in one fixed file. If the storage capacity of the program storage device 2 has an extra capacity, it is desired that all the head recording positions of the fixed files once detected should always be stored at the time of ordinary operation. By carrying out the storing in this way, in the reading/writing operation of audiovisual data extending across fixed files, in the case of obtaining the head position of a fixed file once stored, it is not necessary to read the file control table 12 and the file allocation table 11 on the disk at each reading, whereby the reading/writing operation of audiovisual data can be made more quickly.

### [ Ordinary operation in the file control method ]

Next, ordinary operation for recording, reproducing and deleting audiovisual data in accordance with the file control method used as the embodiment of the present invention will be described specifically.

### 〈 Recording operation 〉

When recording new audiovisual data, a volume file name is first recorded in the volume file control table 132. In addition, generation time and recording start time are recorded at the same time. Next, free areas of fixed files are searched in accordance with the volume file allocation table 131. This detects file numbers having "00" as a number indicating a connection destination in sequence from the head of the volume file allocation table 131. The fixed file designated by the detected file number is opened in the overwriting renewal mode. Then, the data stream of input audiovisual data is recorded sequentially in the corresponding fixed file.

In the case when the length of audiovisual data to be recorded is shorter than the length of the fixed file, closing is required so that the file size of the fixed file is not changed. In order to carry out closing so that the file size is not changed in this way, "the file overwriting renewal and non-emptying mode" should be selected in mode designation at the time of opening the fixed file. In the case of a file system without the above-mentioned mode designation, dummy data is written in a remaining capacity so that the overwritten fixed file has a fixed capacity. Alternatively, the writing position (pointer) of logical data is moved to the position of the last byte of "fixed capacity - 1 byte," and 1 byte of dummy data is written in the position, whereby a fixed file having a constant fixed capacity can be generated.

On the other hand, in the case when the length of data to be recorded exceeds the length of the fixed file, a fixed file to be recordable next is searched. Therefore, the next free file number is searched from the volume file allocation table 131. And the fixed file is opened in the overwriting renewal mode. At this time, the volume file allocation table 131 is renewed so that the connection destination of the preceding fixed file becomes the file number of the fixed file in which writing is carried out at present. And, the data stream of audiovisual data is recorded again sequentially in the searched fixed file.

In the case when all free areas in the volume file allocation table 131 are used up, the fact that further recording is impossible is informed to application software, and the recording operation ends. In the case when data stream can be recorded completely, to indicate that the fixed file wherein recording is carried out last is the last one, "FF" is described at the file number in the volume file allocation table 131. And the number of connections of fixed files, the last renewal time, the last access time, the setting of the writing and reading permission flags, recording end time and the like are recorded in the volume file control table 132 (see FIG. 5).

### 〈 Reproducing operation 〉

Next, the case of reproducing audiovisual data in a volume file will be described.

When audiovisual data is reproduced, the volume file name corresponding thereto is first searched from the volume file control table 132. Next, the head fixed file number of the corresponding volume file name is acquired. If the audiovisual data is not reproduced from the head but reproduced from a midpoint, the number of connections of fixed files up to the position wherein required audiovisual data is stored is calculated first. In the case when application software is an instruction for reproducing audiovisual data from the nth byte thereof for example, the number of the connections can be obtained by dividing n by the number of bytes of one fixed file. Until the file number of the location wherein required data is stored is acquired in order starting from the file number of the head fixed file, the file numbers of the connected fixed files are traced in order in accordance with the volume file allocation table 131. When the file number of the location wherein required audiovisual data is stored is acquired, the audiovisual data is begun to be reproduced. When the reproduction of the audiovisual data of one fixed file corresponding thereto is completed, the audiovisual data of the fixed file at the next connection destination is reproduced. At this time, the reproduced audiovisual data is temporarily stored in a buffer, and output as contiguous data continuously. And in the case when the file number of the fixed file at the connection destination is "FF," the fixed file is the last audiovisual data; when the audiovisual data is reproduced completely, the end of the audiovisual data is informed to the application software, and the reproduction operation is completed.

Furthermore, in the case when an instruction for stopping the reproduction of audiovisual data in the middle is received from the application software, the reproduction of the audiovisual data is stopped at the moment.

### 〈 Deleting operation 〉

Next, operation for deleting a volume file will be described.

First, the corresponding volume file name is searched from the volume file control table 132. Next, the head fixed file number of the corresponding volume file name is acquired. The data connection destination at the file number acquired from the volume file allocation table 131 is read, and the file number of the next fixed file is obtained; at the same time, "00" indicating a free area is written and renewed at the connection destination of the file number of the preceding fixed file. By carrying out the process of filling the connection destinations of file numbers up to the last fixed file with "00," the corresponding volume file can be deleted.

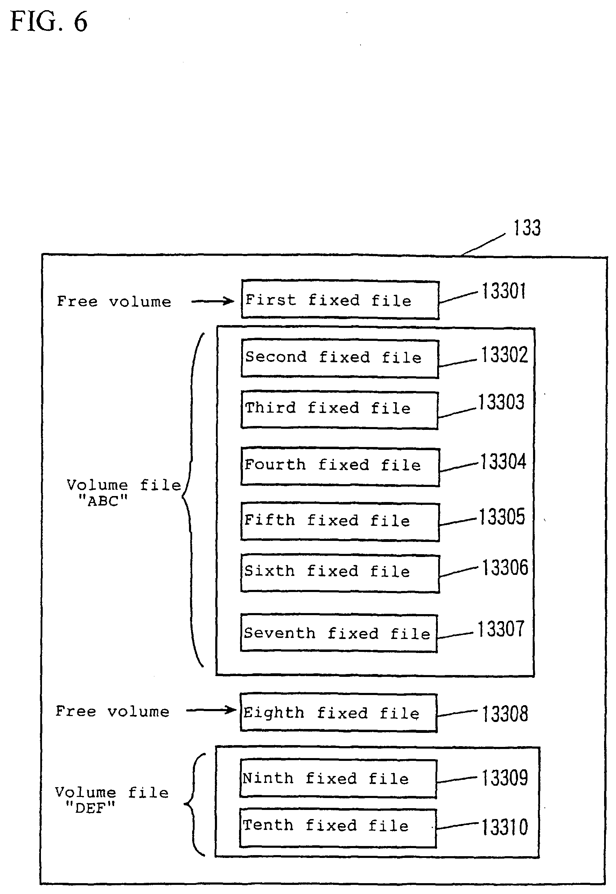

FIG. 6 shows an example showing a control condition of volume files executed in accordance with the file control method of the embodiment of the present invention.

In the fixed file group 133, ten fixed files 13301 to 13310 are stored, and two volume files having volume file names "ABC" and "DEF" are present. Each volume file comprises plural fixed files. Free fixed files are present as two separate files.

### [ Enlargement and reduction of file control area ]

Next, the enlargement method and the reduction method for recording areas in accordance with the file control method of the present invention will be described.

In order to enlarge or reduce one file control area (usually referred to as a partition) on a disk in accordance with the conventional file control method, a logical initializing process (usually referred to as format) for the disk is required. Therefore, in order to enlarge or reduce the partition, it is necessary to delete all data on the disk and to restructure files thereon.

The file control method of the present invention can enlarge and reduce the partition used as a storage area without losing past data.

### 〈 File control area enlargement method 〉

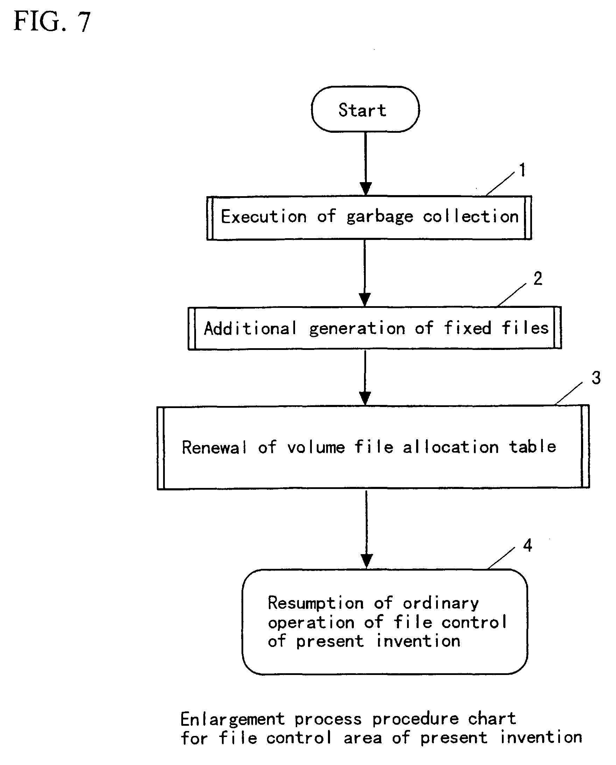

A method of enlarging a file control area used as a recording area in accordance with the file control method of the present invention will be described below by using FIG. 7. FIG. 7 is a flowchart showing the enlargement process procedure for the file control area in accordance with the file control method of the present invention.

At step 1 of FIG. 7, the ordinary operation of the file control method at step 4 of the above-mentioned FIG. 3 is stopped, and a garbage collection process for collecting distributed free areas to form a contiguous area is carried out. This garbage collection process is the same process as the process at step 1 of FIG. 3 described in the newly creating method for the file control area.

Next, at step 2 of FIG. 7, plural fixed files having a predetermined fixed capacity are additionally generated in the contiguous free area. This procedure for generating the additional fixed files is carried out in the same method as the creation of new fixed files executed at step 2 of the above-mentioned FIG. 3.

The plural fixed files added as described above are connected as one volume file and controlled. At step 3 of FIG. 7, the volume file allocation table 131 is renewed. At this time, "00" indicating a free area is described as the connection information of the added fixed files. Next, at step 4 of FIG. 7, the above-mentioned ordinary operation for recording, reproducing and deleting audiovisual data is resumed in accordance with the file control method of the present invention.

### 〈 File control area reduction method 〉

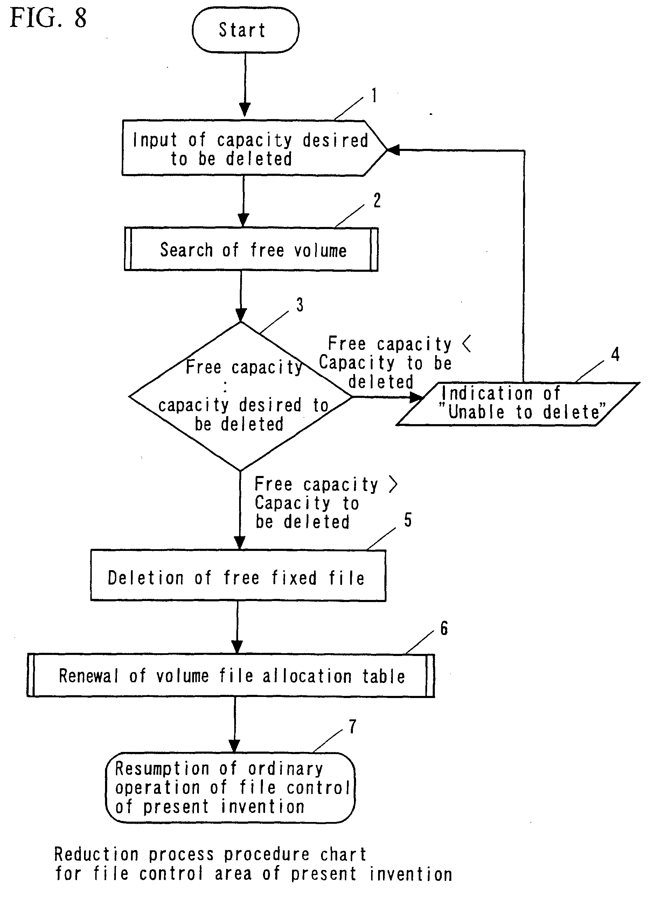

Next, a method of reducing a file control area used as a recording area in accordance with the file control method of the present invention will be described by using FIG. 8. FIG. 8 is a flowchart showing the reduction process procedure for the file control area in accordance with the file control method of the present invention.

At step 1 of FIG. 8, the ordinary operation in accordance with the file control method of the present invention is stopped, and an instruction regarding a capacity desired to be deleted is received from the user.

Next, at step 2 of FIG. 8, a free fixed file to be deleted is searched. This search is executed by acquiring the number of free fixed files and their respective file numbers in accordance with the volume file allocation table 131.

Next, at step 3 of FIG. 8, the capacity desired to be deleted as instructed by the user is compared with a free capacity calculated from the quantity of the above-mentioned free fixed files. If the free capacity is less than the capacity desired to be deleted, the fact that the file control area cannot be reduced because of insufficient free capacity is informed to the user at step 4 of FIG. 8. In this case, the user selects a volume file capable of being deleted in accordance with the volume file control table 132, and the deletion of the corresponding volume file is executed. After the deletion of the volume file is executed in this way, the first process of the reduction process procedure at step 1 of FIG. 8 should be started.

Conversely, in the case when the free capacity is the same as the capacity desired to be deleted, or larger than the capacity desired to be deleted, the file names of fixed files having free capacity are designated, and the deletion of the fixed files is executed (at step 5 of FIG. 8).

In order to delete the connection information of the plural fixed files deleted as described above, the volume file allocation table 131 is renewed at step 6 of FIG. 8. At this time, "FE" indicating the usage prohibition of the ordinary operation is described as the connection information of the deleted fixed files.

And at step 7 of FIG. 8, the above-mentioned ordinary operation for executing the recording, reproduction and deletion of audiovisual data in accordance with the file control method of the present invention is resumed.

However, in the case of executing the process of enlarging the file control area next time, the fixed file name having a file number wherein "FE" is described as the connection information takes higher priority and is generated. For example, in the case when file numbers 1 to 10 are present, and the connection information of the file number 8 among them is "FE," the fixed file name of the fixed file to be added by the enlargement process is determined to be "file 8.dat." In the case of continuously adding a fixed file by the enlargement process, a file name "file 11.dat" corresponding to the eleventh file number is generated.

As described above, in accordance with the present invention, a file control area in accordance with the present invention is structured on an existing general-purpose file system, and configured so that the recording and reproduction of audiovisual data are executed; therefore, it is not necessary to directly control the physical recording position on the recording medium of the disk apparatus by using the existing general-purpose file system; furthermore, it is possible to simply execute the garbage collection process and the like by using the utility of an existing operating system (OS). In addition, the file control method of the present invention can easily coexist with conventional file control.

As described above, in the case of enlarging or reducing a file control area in accordance with the file control method of the present invention, the enlargement or reduction can be attained by executing only the garbage collection process and the additional generation process for volume files without executing the logical format process of the disk. Therefore, in accordance with the present invention, in the enlargement or reduction process of a recording area, highly safe file control can be carried out without causing loss of all data because of the execution of the logical format process of the disk.

In the above-mentioned embodiment, as the connection information among fixed files constituting a volume file, the connection condition of the file numbers of fixed files is listed in the volume file allocation table 131, and executed. The present invention is not limited to this; a list wherein the fixed file names or the fixed file numbers of all fixed files constituting one volume file are corresponded to relative addresses or absolute addresses on the disk, for example, may be used for execution. The addresses on the disk used for the list in this case may be addresses whose locations can be searched directly, or they may be addresses to be searched indirectly by using plural allocation tables. In other words, in executing the present invention, the connection information among the fixed files constituting the volume file may be any means, provided that the means can reference the corresponding relationship between the volume file and the plural fixed files constituting this volume file.

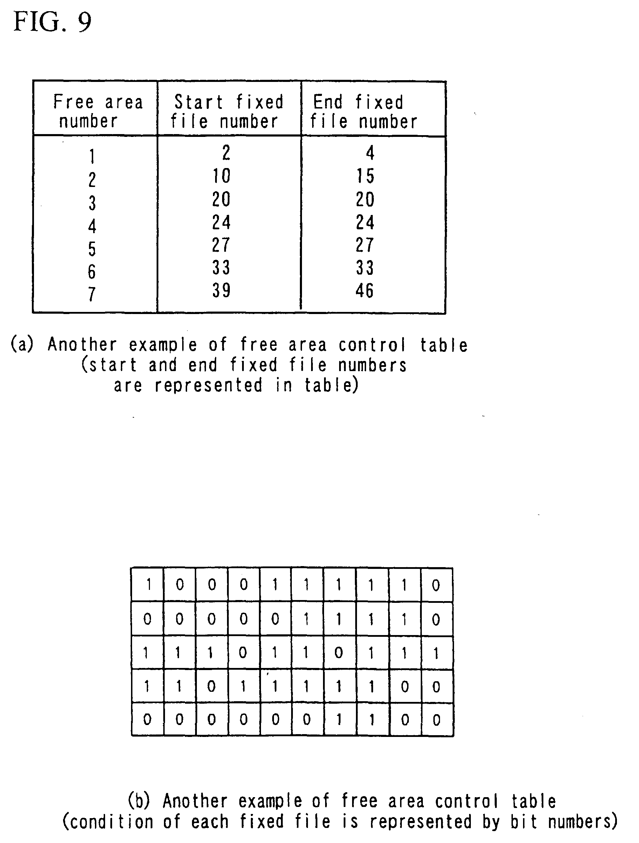

Furthermore, in the file control method of the present invention, as the free area control method, instead of describing "00" indicating a free area as the connection information just as the above-mentioned embodiment, a free area control table may be prepared separately and used for control. An example of this free area control table is shown in FIG. 9.

(a) of FIG. 9 is a table for controlling free areas by using the start fixed file numbers (or start fixed file names) and the end fixed file numbers (or end fixed file names) of the free areas. (b) of FIG. 9 is a table for controlling used areas and free areas in accordance with "1" and "0" by representing all fixed files by using bit map data. The present invention is not limited to these free area control tables; any method can be used, provided that the means can control free areas.

Furthermore, although the garbage collection method in accordance with the above-mentioned embodiment is executed for all the recording areas of the disk apparatus as described in the execution procedure at step 1 of FIG. 3, in order that free areas quickly become contiguous in areas other than the file control area of the present invention, the file names of the fixed file group 133 (file name = "file 1.dat," "file 2.dat," .....) may be excluded from the objects which are subjected to the garbage collection process, and the garbage collection process may be executed. By executing the garbage collection process in this way, the garbage collection process can be executed more quickly than the garbage collection for all recording areas.

Furthermore, in the garbage collection process, by giving priority to only the free areas and by subjecting them to the garbage collection process so as to make them contiguous while distributed files remain unchanged, and by ending the garbage collection process at the time when all the free areas become one contiguous area, the garbage collection process can be executed more quickly in comparison with the above-mentioned embodiment.

Furthermore, in the file control method of the present invention, instead of storing the recording start positions of all the files of the fixed file group 133 on the disk in the program storage device 2 just as the above-mentioned embodiment, configuration can be made so as to store the file allocation table 11 in the program storage device 2 (main storage device) before starting the ordinary operation. With this configuration, at the time of reading and writing the fixed file group 133, it is completely unnecessary to read the file allocation table 11 stored on the disk when opening fixed files, whereby reading/writing operation of volume file data can be attained more quickly in comparison with the above-mentioned embodiment.

In addition, in the file control method of the present invention, in the case when a volume file name is given, configuration may be made so that the volume file allocation table 131 wherein the volume file name has been described can be immediately read in the program storage device 2 (main storage device). Furthermore, in the file control method of the present invention, quick reading can be made by keeping all the plural fixed files constituting the volume file open.

Moreover, in the case when the capacity of the main storage device can be secured sufficiently, extra access to the disk apparatus becomes unnecessary by reading all the information of the volume file allocation table 131 and by keeping all the fixed files open.

Furthermore, in the file control method of the present invention, fixed files may be present in a distributed condition in plural file control areas (partitions) or in plural disk apparatuses. Moreover, the plural file control areas (partitions) or disk apparatuses in which fixed files are stored may be present at geographically remote locations on a network.

Furthermore, in the file control method of the present invention, if fixed files comprise the same number of data blocks (or sectors), the file size of each fixed file is not required to be completely identical. For example, if the first fixed file and the second fixed file have the same number of data blocks, their file sizes may be different.

In the file control method of the present invention, at the time of overwriting a volume file, in the case when a data capacity smaller than the data capacity of past data having been described until then is recorded, and overwriting is not executed on at least one fixed file constituting the volume file, the fixed file can be configured as a reproducible free fixed file. With this configuration, past audiovisual data having been recorded on the fixed file can be reproduced. In order to generate the above-mentioned reproducible free fixed file, "Fn" indicating the last fixed file among overwritten fixed files is described as the connection information of the volume film allocation table 131 for example. Herein, "F" is a flag indicating the last fixed file, and "n" indicates the head fixed file number (for example, a 2-digit number, such as 02, 03, 04, etc.) of the reproducible free fixed file. This connection information is obtained by adding "F" indicating the last fixed file to the fixed file number "n" of the connection destination before renewal. Therefore, the head fixed file number of the reproducible free fixed file can be recognized in accordance with the connection information of the overwritten last fixed file. The fixed file following the fixed file having "Fn" described as the connection information, that is, the reproducible free fixed file, is overwritten by other data and renewed at the time of the next overwriting operation as a matter of course. By using the above-mentioned connection information, in the file control method of the present invention, part of the previous audiovisual data can be retained, whereby it becomes possible to prevent the complete loss of past data without exception due to overwriting of audiovisual data.

As described above, in the present embodiment, at the time of overwriting the volume file, by adding a flag to the connection information of the overwritten last fixed file among the plural fixed files constituting the volume file, the remaining fixed files which have not been overwritten can also be used as reproducible free areas. The data having been recorded in these reproducible free areas become reproducible data.

The above-mentioned reproducible free areas can also be created in the same way in accordance with a conventional file control method. In other words, at the time of overwriting a file, by adding a flag to the connection information of the overwritten last data block among plural data blocks constituting the file, the remaining data blocks which have not been overwritten can also be used as reproducible free areas. The data having been recorded in these reproducible free areas become reproducible data.

The file control method of the present invention described in the above-mentioned embodiment is recorded on a recording medium as file control programs and used.

As described above, in accordance with the present invention, configuration is made such that a contiguous free area is obtained by a garbage collection process, plural fixed files are generated in the obtained free area, the plural fixed files are connected to form one volume file, and audiovisual data is recorded on this volume file. Therefore, the arrangement of the recorded audiovisual data on the disk becomes contiguous in one fixed file, and it is not required to carry out the garbage collection process when recording audiovisual data, whereby audiovisual data can be recorded immediately, and a predetermined data transfer rate can be obtained.

Furthermore, in the file control method of the present invention, in the case when a file control area is enlarged or reduced, it is not necessary to carry out a format process, and execution is made possible only by a garbage collection and an additional volume file generation process, whereby the loss of all data due to the conventional logical disk format process does not occur.

Furthermore, in the file control method of the present invention, by structuring a file control area in accordance with the present invention on an existing general-purpose file system and by carrying out execution, concurrent use with the conventional file control area can be attained easily.

### INDUSTRIAL APPLICABILITY

The present invention can be used for disk apparatuses for recording/reproducing multimedia data requiring a constant transfer rate, such as audiovisual data, in personal computers and home-use multimedia apparatuses, and can be applied to file control for recording, reproducing and deleting audiovisual data.

## Claims

1. A file control apparatus comprising:
a free area generating means for generating a contiguous free area;
a fixed file generating means for generating plural fixed files having a substantially constant file size in the said contiguous free area;
a volume file structuring means for structuring a large-capacity volume file by connecting said plural fixed files; and
a fixed file maintaining means for maintaining the file arrangement of said fixed files at the time of the recording or renewal of the data of said fixed files.

2. A file control apparatus in accordance with claim 1, having a plurality of said volume files and further provided with a volume file control means for controlling the list information of said plural volume files.

3. A file control apparatus in accordance with claim 1 or 2, wherein at the time when data of a fixed file comprising at least one data block is recorded or renewed, said fixed file maintaining means maintains the number of said data blocks of said fixed file constant.

4. A file control apparatus in accordance with claim 1, 2 or 3, comprising:
a volume file writing means for overwriting fixed files of a volume file;
at the time when data having a capacity smaller than the capacity of past data is recorded and when at least one unoverwritten fixed file is present among said plural fixed files constituting said volume file, a free area recording means for recording said unoverwritten fixed file as a reproducible free area; and
a data reproducing means for reproducing past data recorded on said fixed files.

5. A file control method comprising:
a free area generating process for generating a contiguous free area;
a fixed file generating process for generating plural fixed files having a substantially constant file size in said generated contiguous free area;
a volume file structuring process for structuring a large-capacity volume file by connecting said plural fixed files; and
a fixed file maintaining process for maintaining the file arrangement of said fixed files at the time of the recording or renewal of the data of said fixed files.

6. A file control method in accordance with claim 5, having a plurality of said volume files and further provided with a volume file control process for controlling the list information of said plural volume files.

7. A file control method in accordance with claim 5 or 6, wherein at the time when data of a fixed file comprising at least one data block is recorded or renewed, said fixed file maintaining process maintains the number of said data blocks of said fixed file constant.

8. A file control method in accordance with claim 5 or 6, wherein said fixed files are recorded on the recording medium of a disk apparatus.

9. A file control method in accordance with claim 5 or 6, wherein a data block constituting said fixed file comprises at least one sector.

10. A file control method in accordance with claim 5 or 6, comprising:
a volume file writing process for overwriting fixed files of a volume file;
at the time when data having a capacity smaller than the capacity of past data is recorded and when at least one unoverwritten fixed file is present among said plural fixed files constituting said volume file, a free area recording process for recording said unoverwritten fixed file as a reproducible free area; and
a data reproducing process for reproducing past data recorded on said fixed files.

11. A file control method comprising:
a data writing process for overwriting data blocks of a file;
at the time when data having a capacity smaller than the capacity of past data is recorded and when at least one unoverwritten data block is present among said plural data blocks constituting said file, a free area recording process for recording said unoverwritten data block as a reproducible free area; and
a data reproducing process for reproducing past data recorded on said data blocks.

12. A file control method in accordance with claim 11, wherein said file is a volume file, and said data block is a fixed file.

13. A recording medium with recorded file control programs for:
generating a contiguous free area;
generating plural fixed files having a substantially constant file size in said generated contiguous free area;
structuring a large-capacity volume file by connecting said plural fixed files; and
maintaining the file arrangement of said fixed files at the time of the recording or renewal of the data of said fixed files.

14. A recording medium in accordance with claim 13, provided with recorded file control programs having a plurality of said volume files and for controlling the list information of said plural volume files.

15. A recording medium in accordance with claim 13 or 14, at the time when data of a fixed file comprising at least one data block is recorded or renewed, provided with recorded file control programs for maintaining the number of said data blocks of said fixed file constant.
